# EUROPÄISCHE PATENTSCHRIFT

(11) **EP 2 804 013 B1**
(45) Veröffentlichungstag und Bekanntmachung des Hinweises auf die Patenterteilung: **15.04.2015**
(21) Anmeldenummer: 13167404.6
(22) Anmeldetag: 13.05.2013
(51) Int. Cl.: G01S 13/46, G01S 13/00, G01S 13/87, G08G 1/015, G07B 15/06

(54) **Vorrichtung zum Messen der Position eines Fahrzeugs oder einer Oberfläche desselben**
Device for measuring the position of a vehicle or a surface thereof
Dispositif de mesure de la position d'un véhicule ou d'une surface de celui-ci

(43) Veröffentlichungstag der Anmeldung: 19.11.2014
(73) Patentinhaber: Kapsch TrafficCom AG, 1120 Wien (AT)
(72) Erfinder: Nagy, Oliver, 1190 Wien (AT)
(74) Vertreter: Weiser, Andreas

(56) Entgegenhaltungen:
- EP-A2- 0 636 900
- WO-A1-94/28377
- WO-A1-2005/093708
- WO-A1-2011/139408
- DE-A1- 19 737 868
- US-A1- 2004 008 514
- US-A1- 2006 022 866
- US-A1- 2006 273 950
- US-A1- 2008 169 961

## Beschreibung

Die vorliegende Erfindung betrifft eine Vorrichtung zum Messen der Position eines Fahrzeugs oder einer Oberfläche desselben auf einer Fahrbahn.

Die Positionsmessung von Fahrzeugen ist für vielerlei Aufgaben in der Verkehrssteuerung, -überwachung und -vergebührung wichtig, beispielsweise zur Bestimmung der von einem Fahrzeug verwendeten Fahrspur bei einer elektronischen Verkehrskontrolloder Mautstelle oder auch zur Erkennung der Längsposition eines Fahrzeugs entlang der Fahrbahn, um das Fahrzeug dem Bild einer Verkehrsüberwachungskamera eindeutig zuordnen zu können. Die Messung der Position einer Oberfläche des Fahrzeugs, beispielsweise seiner Deck- und Seitenflächen, ist für eine Größenbestimmung und damit Klassifizierung des Fahrzeugs von Bedeutung, wie dies in der EP 0 636 900 A2 offenbart wird, beispielsweise ob es sich um einen PKW oder LKW handelt, um z.B. fahrzeugklassenabhängige Fahrbeschränkungen oder Mautgebühren kontrollieren und durchsetzen zu können.

Zur Positionsmessung werden derzeit überwiegend optische Systeme eingesetzt, wie Laserscanner oder Videokameras. Diese sind auf gute Sichtverhältnisse angewiesen und daher stark witterungsabhängig; bei Regen, Schnee oder Sprühgischt versagen sie häufig. Die Optik von Laserscannern und Videokameras erfordert auch eine häufige Reinigung, um einsatzbereit zu bleiben, und aufgrund mechanisch bewegter Teile haben sie eine begrenzte Lebensdauer und einen begrenzten Temperatureinsatzbereich.

In Teilbereichen wie Verkehrsflussmonitoranlagen werden derzeit auch Radarsysteme verwendet, die von einem erhöhten Punkt aus, beispielsweise einem Antennenmast neben einer Autobahn, bewegte Fahrzeuge mittels Dopplerradars detektieren und ihre Bewegung in einem Radarbild mitverfolgen lassen. Die Positionsmessgenauigkeit solcher Radarsysteme ist begrenzt, und die Dopplerauswertung der Fahrzeuggeschwindigkeiten erfordert einen hohen Rechenaufwand, um das Verkehrsflussbild zu erstellen.

Die Erfindung setzt sich zum Ziel, neuartige Vorrichtungen und Verfahren zur Positionsmessung von Fahrzeugen bzw. Oberflächen derselben zu schaffen, welche störungsunanfälliger als die bekannten optischen Systeme und einfacher, kostengünstiger und genauer sind als die bekannten Radarsysteme.

Dieses Ziel wird mit einer Vorrichtung der einleitend genannten Art erreicht, mit:
zumindest einem Radarsender, der in einer Sendeposition oberhalb der Ebene der Fahrbahn angeordnet ist und Radarstrahlen nach unten sendet,
einer Mehrzahl von Radarempfängern, die in verschiedenen Empfangspositionen mit gegenseitigen Abständen oberhalb der Ebene der Fahrbahn verteilt angeordnet sind, Reflexionen der Radarstrahlen von unten empfangen und jeweils in ein Empfangssignal umwandeln, und
einer an den Radarsender und die Radarempfänger angeschlossenen Auswerteeinrichtung, welche dafür ausgebildet ist, aus der Sendeposition, den Empfangspositionen und den Empfangssignalen die genannte Position zu messen.

Die Erfindung verwendet mehrere örtlich verteilte Radarempfänger, um die von einem zu vermessenden Fahrzeug reflektierten Radarstrahlen eines einzigen Radarsenders auszuwerten. Aus der bekannten geometrischen Anordnung zwischen Radarsender einerseits und Radarempfängern andererseits lassen sich zahlreiche Positionsinformationen über das Fahrzeug auf der Fahrbahn ableiten, und zwar bereits durch Vergleich bzw. gemeinsame Auswertung der Empfangssignale der Radarempfänger, ohne dass es dazu komplizierter Doppler-, Laufzeit- oder Phaseninterferenzmessungen bedarf.

Im einfachsten Fall genügt eine Auswertung der relativen Signalstärken der Empfangssignale der Radarempfänger, um Information über die Position des Fahrzeugs bzw. eine Oberfläche desselben bezüglich der Radarempfänger zu erhalten. Je mehr Radarempfänger vorgesehen werden, desto genauer ist die örtliche Auflösung der Positionsmessung. Die Genauigkeit der Positionsmessanordnung wird dabei nicht durch komplizierte, rechenintensive signalanalytische Auswertungen der Empfangssignale erreicht, sondern durch einfache trigonometrische Berechnungen und eine einfache Auswertung der Empfangssignalstärken. Die Radarempfänger können dadurch sehr einfach, leichtgewichtig und kostengünstig ausgeführt werden, sodass eine Vielzahl solcher Radarempfänger verwendet werden kann.

Gemäß einer bevorzugten Ausführungsform der Erfindung liegen der Radarsender und die Radarempfänger in einer gemeinsamen, die Fahrbahn querenden Ebene, bevorzugt an einer die Fahrbahn querüberspannenden Montagebrücke montiert. Dadurch können Positionen des Fahrzeugs bzw. einer Oberfläche desselben in dieser Ebene mit hoher Genauigkeit und einfachen rechentechnischen Mitteln bestimmt werden, beispielsweise die Fahrspur, welche das Fahrzeug verwendet, die Höhe der Deckfläche des Fahrzeugs bezüglich der Fahrbahn oder die Lage einer Seitenfläche des Fahrzeugs. In einer alternativen Ausführungsform könnten die Radarsender und Radarempfänger auch in einer entlang der Fahrbahn ausgerichteten oder schräg zur Fahrbahn verlaufenden Ebene liegen, sodass die Position des Fahrzeugs oder einer Stirnfläche des Fahrzeugs auch in Längsrichtung der Fahrbahn bestimmt werden kann.

In einfachen Ausführungsformen der Erfindung kann der Radarsender ein Continuous-Wave-Radarsender (CW-Radar) sein, und die Auswerteeinrichtung wertet beispielsweise lediglich die Signalstärken der Empfangssignale aus. Optional kann die Auswerteeinrichtung zusätzlich Interferenzmessungen zur Entfernungsmessung durchführen.

In einer weiteren Ausführungsform der Erfindung sendet der Radarsender - von Sendeimpulsen gesteuert - gepulste Radarstrahlen aus und die Empfangssignale enthalten folglich Empfangsimpulse, und die Auswerteeinrichtung ist dafür ausgebildet, für die Positionsmessung nur solche Empfangssignale zu berücksichtigen, deren Empfangsimpulse jeweils innerhalb eines vorgegebenen Zeitfensters nach einem Sendeimpuls liegen. Die Zeitfenster ("range gates") können so eingestellt werden, dass Mehrfachreflexionen der Radarstrahlen, beispielsweise an nichtinteressierenden Umgebungsobjekten oder zwischen der Bodenplatte des Fahrzeugs und der Fahrbahn, ausgeblendet werden, um die Messgenauigkeit zu erhöhen.

Gemäß einer ersten Variante der Erfindung wird die Position des Fahrzeugs aus der Abschattung bestimmt, die das Fahrzeug für manche der Radarempfänger erzeugt. Dazu ist bevorzugt die Auswerteeinrichtung dafür ausgebildet, die Signalstärken der Empfangssignale miteinander zu vergleichen und aus den Empfangspositionen jener Radarempfänger, welche ein schwächeres Empfangssignal aufweisen, die Position des Fahrzeugs zu ermitteln. Dies ermöglicht eine grobe Bestimmung der Fahrzeugposition, die umso genauer ist, je mehr Radarempfänger verwendet werden.

Eine zweite Variante der Erfindung beruht auf gerichteten Radarstrahlen und der Messung der Reflexionen am Fahrzeug bzw. seiner Oberfläche. Dazu sendet bevorzugt der Radarsender die Radarstrahlen in einer Hauptsenderichtung gerichtet aus, die zur Vertikalen geneigt ist, und die Auswerteeinrichtung ist dafür ausgebildet, die Signalstärken der Empfangssignale miteinander zu vergleichen und aus der Empfangsposition jenes Radarempfängers, welcher das stärkste Empfangssignal aufweist, die Position einer Oberfläche des Fahrzeugs zu ermitteln. Die Genauigkeit der Messvorrichtung kann durch eine stärkere Richtwirkung des Radarsenders, d.h. stärkere Bündelung seiner Radarstrahlen in der Hauptsenderichtung, erreicht werden, zusätzlich zu der Maßnahme der Erhöhung der Anzahl der Radarempfänger.

Bevorzugt können auch gerichtete Radarempfänger eingesetzt werden, um die Genauigkeit noch weiter zu erhöhen. Dazu empfängt bevorzugt jeder Radarempfänger Reflexionen vorwiegend in einer Hauptempfangsrichtung, die zur Vertikalen geneigt ist, wobei die Hauptsenderichtung und die Hauptempfangsrichtungen in einer gemeinsamen Ebene liegen. Die genannte Ebene bildet eine Messebene, innerhalb der die Position von reflektierenden Objekten durch Identifizieren des Radarempfängers mit dem stärksten Empfangssignal bestimmt werden können, und zwar umso genauer, je stärker die Richtwirkung der Radarantennen des Radarsenders und der Radarempfänger und je höher die Dichte an Radarempfängern ist, d.h. je mehr Radarempfänger vorhanden sind.

Die Messvorrichtung kann je nach Winkelstellung der genannten Hauptsende- und -empfangsrichtungen zur Vermessung unterschiedlicher Oberflächen eines Fahrzeugs verwendet werden. Gemäß einer ersten Ausführungsform sind die Hauptempfangsrichtungen zueinander und zur Hauptsenderichtung parallel, um die Position einer im wesentlichen vertikalen Oberfläche des Fahrzeugs zu ermitteln; gemäß einer alternativen Ausführungsform sind die Hauptempfangsrichtungen zueinander parallel und zur Hauptsenderichtung bezüglich der Vertikalen spiegelbildlich geneigt, um die Position einer im wesentlichen horizontalen Oberfläche des Fahrzeugs zu ermitteln. Die erste Ausführungsform vermisst vertikale Oberflächen, beispielsweise die Seiten- oder Stirnwände eines Fahrzeugs, über den Umweg einer Sekundärreflexion an der im wesentlichen horizontalen Fahrbahn ("Corner-Effekt"). Die zweite Ausführungsform misst direkt die Primärreflexion an einer horizontalen Oberfläche, z.B. der Deckfläche oder Motorhaube des Fahrzeugs.

In beiden Varianten kann zusätzlich eine Laufzeitmessung durchgeführt werden, wenn gepulste, modulierte oder codierte Radarstrahlen verwendet oder Interferenzmessungen an Dauerstrich-Radarstrahlen durchgeführt werden. Die Auswerteeinrichtung kann somit bevorzugt dafür ausgebildet sein, Laufzeitmessungen zwischen Sende- und Empfangsimpulsen durchzuführen und daraus den Abstand der Oberfläche zu einem oder mehreren Radarempfängern zu ermitteln, um die Positionsmessung zu verbessern. Bevorzugt sind die Laufzeitmessungen Impulslaufzeitmessungen zwischen Sende- und Empfangsimpulsen, oder es werden Laufzeitmessungen nach dem FMCW-Verfahren durchgeführt.

Besonders günstig ist es, wenn die Hauptsende- und Hauptempfangsrichtungen der Radarsender und Radarempfänger im Betrieb veränderbar sind, bevorzugt mittels phasengesteuerter Antennenarrays oder selektiver Auswahl einzelner Richtantennen. Dadurch kann die Positionsmessgenauigkeit noch weiter erhöht werden: Durch Messung in verschiedenen Richtungen können mit derselben Anzahl von Radarempfängern mehr Messpunkte vermessen werden, oder es kann alternativ bei gleicher Anzahl von Messpunkten mit einer geringeren Anzahl von Radarempfängern das Auslangen gefunden werden.

Gemäß einer weiteren vorteilhaften Ausführungsform der Erfindung sind der Radarsender und die Radarempfänger jeweils durch einen Radarsendeempfänger gebildet, der im Code-, Zeit-oder Frequenzmultiplex wahlweise als Radarsender oder Radarempfänger betreibbar ist. Dadurch kann einerseits der Fertigungsund Montageaufwand vereinfacht werden, weil einheitliche Komponenten, nämlich Radarsendeempfänger, montiert werden können, die lediglich verschieden angesteuert und ausgewertet werden. Andererseits können damit noch mehr Messpunkte mit derselben Anordnung vermessen werden: Die einzelnen Komponenten können an ihrer jeweiligen Montageposition wahlweise als Sender oder Empfänger wirken, wodurch sich mehr Kombinationsmöglichkeiten und damit mehr vermessbare Punkte in der Messebene ergeben.

Die Vorrichtung der Erfindung eignet sich für alle Arten von Radarsendern und -empfängern, sei es Impuls- oder CW-Radar, wobei die Radarstrahlen auch auf verschiedenste Arten moduliert bzw. codiert sein können. Besonders günstig ist die Verwendung von sehr hochfrequenten Radarstrahlen, insbesondere im Frequenzbereich von 1 GHz bis 100 GHz, bevorzugt 50 GHz bis 100 GHz. Diese führt zu sehr kleinen Antennenanordnungen, die auch bei kleinen Abmessungen stark gebündelte Richtwirkungen haben, und eröffnet die Möglichkeit, eine Vielzahl leichtgewichtiger Sender und Empfänger bzw. Sendeempfänger an einer Montagebrücke zu montieren, welche wiederum entsprechend gering dimensioniert werden kann und damit kostengünstiger ist als für herkömmliche optische Positionsmesssysteme.

Die Erfindung wird nachstehend anhand von in den beigeschlossenen Zeichnungen dargestellten Ausführungsbeispielen näher erläutert. In den Zeichnungen zeigen:
Fig. 1 eine erste Ausführungsform der Vorrichtung der Erfindung schematisch in Fahrbahnlängsrichtung gesehen;
Fig. 2a die Vorrichtung von Fig. 1 in der Draufsicht;
Fig. 2b eine alternative Ausführungsform der Vorrichtung von Fig. 1 in der Draufsicht;
die Fig. 3 und 4 die geometrischen Verhältnisse bei der Vermessung einer Seitenfläche (Fig. 3) bzw. Deckfläche (Fig. 4) eines Fahrzeugs mithilfe zweier weiterer Ausführungsformen der Vorrichtung der Erfindung;
die Fig. 5 und 6 die geometrischen Verhältnisse bei der Vermessung einer Seitenfläche (Fig. 5) bzw. Deckfläche (Fig. 6) eines Fahrzeugs mithilfe zweier weiterer Ausführungsformen der Vorrichtung der Erfindung;
Fig. 7 ein Zeitdiagramm der Range-Gating-Ausführungsformen der Vorrichtungen der Erfindung; und
Fig. 8 ein Zeitdiagramm der Empfangssignale im Rahmen der Vorrichtung der Fig. 5 und 6.

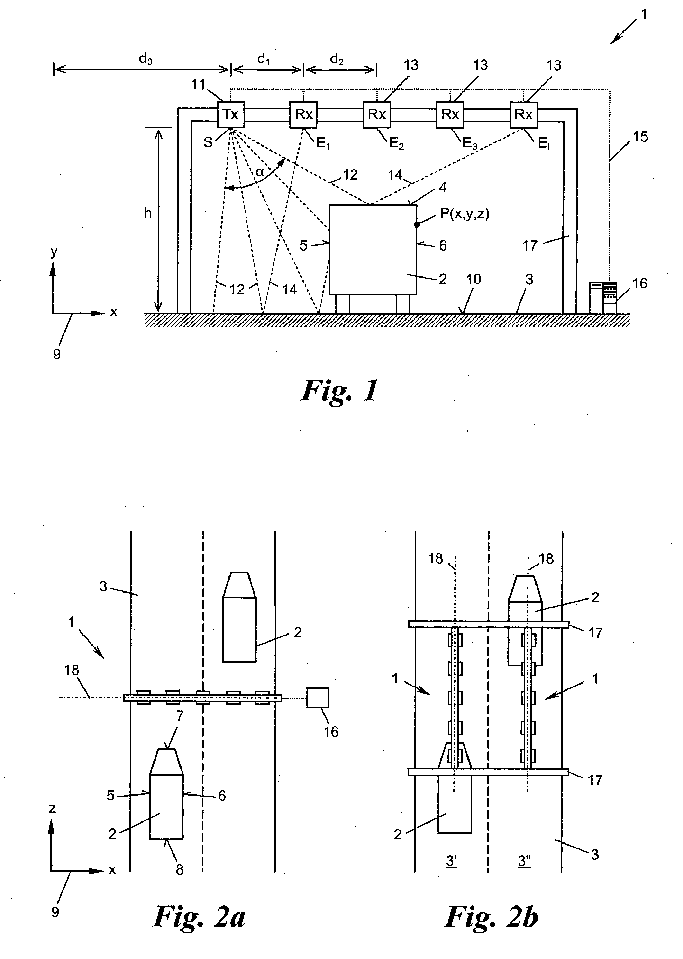

In den Fig. 1 und 2a ist eine Vorrichtung 1 zum Messen der Position eines Fahrzeugs 2 auf einer Fahrbahn 3 gezeigt. Der Begriff "Position" wird hier in seiner allgemeinsten Form verstanden und umfasst eine, zwei oder drei der Koordinaten x, y, z eines beliebigen Punktes P des Fahrzeugs 2 oder einer seiner Oberflächen, beispielsweise einer Deckfläche 4, Seitenfläche 5, 6 oder Stirnfläche 7, 8, in einem Koordinatensystem 9. Das Koordinatensystem 9 ist bevorzugt auf die Lage der Vorrichtung 1 bezüglich der Fahrbahn 3 bezogen; im vorliegenden Beispiel liegt die Ebene 10 der Fahrbahn 3 in der x/z-Ebene des Koordinatensystems, die Fahrbahnlängsrichtung verläuft in z-Richtung und die Fahrbahnquerrichtung in x-Richtung; die y-Koordinate definiert die Höhe eines Punktes P oberhalb der Fahrbahnebene 10.

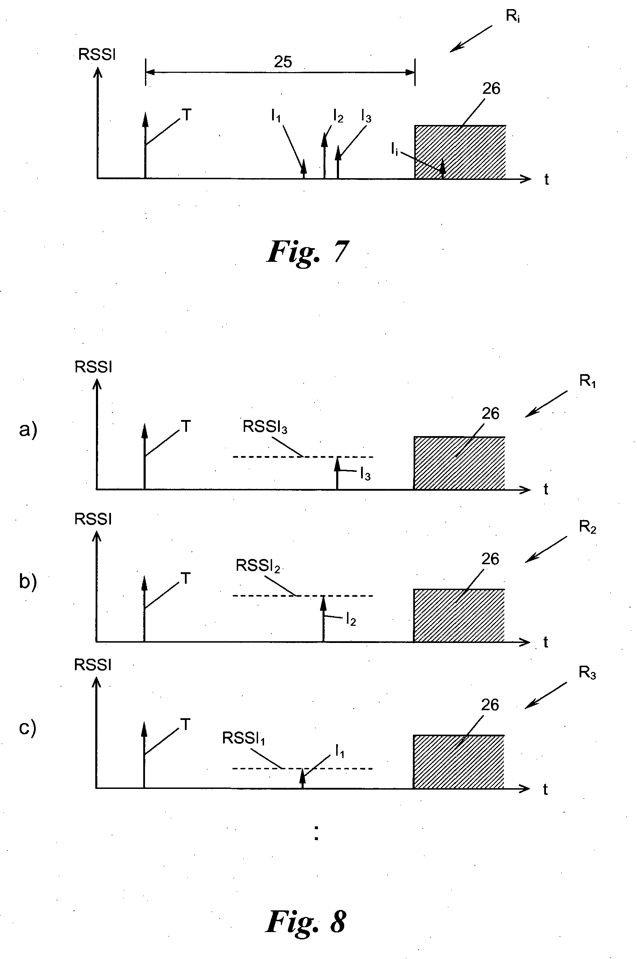

Die Vorrichtung 1 umfasst einen Radarsender 11, der in einer Sendeposition S oberhalb der Ebene 10 der Fahrbahn 3 angeordnet ist und Radarstrahlen 12 nach unten hin aussendet, sowie eine Mehrzahl von Radarempfängern 13, die in verschiedenen Empfangspositionen E₁, E₂, ..., allgemein Eᵢ, ebenfalls oberhalb der Fahrbahnebene 10 angeordnet sind und Reflexionen 14 der Radarstrahlen 12 von unten her empfangen. Die Radarempfänger 13 wandeln die empfangenen reflektierten Radarstrahlen 14 jeweils in ein Empfangssignal R₁, R₂ ..., allgemein Rᵢ, (Fig. 7, 8) um, das sie über eine Leitung 15 an eine Auswerteeinrichtung 16 zur Auswertung senden; über die Leitung 15 steht die Auswerteeinrichtung 16 auch mit dem Radarsender 11 in Verbindung, um diesen zu steuern.

Die Radarempfänger 13 haben jeweils zum Radarsender 11 und zueinander Abstände d₁, d₂, ..., allgemein d₁, d.h. sie sind oberhalb der Ebene 10 verteilt. In dem gezeigten Beispiel sind der Radarsender 11 und alle Radarempfänger 13 an einer gemeinsamen Montagebrücke 17 auf einer gemeinsamen Montagehöhe h und in einer gemeinsamen, die Fahrbahn 3 querüberspannenden Ebene 18 montiert. Auch die Radarstrahlen 12 und reflektierten Radarstrahlen 14 verlaufen in dieser Ebene 18, welche in diesem Beispiel die Messebene der Vorrichtung 1 darstellt. Der Radarsender 11 und die Radarempfänger 13 könnten auch auf individuellen, unterschiedlichen Höhen hᵢ montiert sein, und/oder unregelmäßige Abstände dᵢ haben, und/oder nicht in einer gemeinsamen Ebene liegen; letzteres vereinfacht aber die trigonometrischen Berechnungen.

Die Messebene 18, in der die Radarstrahlen 12, 14 liegen, können auch um die x-Achse geneigt und/oder um die y-Achse gedreht sein, und es können auch mehr als eine Messebene 18 vorgesehen werden. Fig. 2b zeigt eine Ausführungsform mit zwei Vorrichtungen 1, deren Messebenen 18 jeweils parallel zur y/z-Ebene über einer Fahrspur 3', 3" der Fahrbahn 3 verlaufen, um Positionen des Fahrzeugs 2 bzw. seiner Stirnflächen 7, 8 in Längsrichtung z der Fahrbahn 3 zu messen.

Der Radarsender 11 und die Radarempfänger 13 können beliebige in der Technik bekannte Arten von Radarstrahlen 12, 14 senden bzw. empfangen, z.B. CW-Radarstrahlen oder gepulste Radarstrahlen. Die Auswerteeinrichtung 16 kann demgemäß auch herkömmliche Interferenz- und/oder Impulslaufzeit-Messverfahren an den Radarstrahlen 12, 14 vornehmen, um Entfernungen zu den Messpunkten P zu messen.

Die Ausführungsform von Fig. 1 arbeitet nach dem Prinzip der Detektion einer Abschattung der Radarstrahlen 12 bzw. 14 durch ein in der Messebene 18 befindliches Objekt wie das Fahrzeug 2. Die Auswerteeinrichtung 16 wertet dazu die Signalstärken, z.B. Amplituden oder Empfangssignalstärken (received signal strength indications, RSSI) der Empfangssignale Rᵢ der verschiedenen Radarempfänger 13 aus und vergleicht sie beispielsweise miteinander oder mit vorgegebenen Schwellwerten, um jene(n) Radarempfänger 13 zu ermitteln, welche(r) ein vergleichsweise schwächeres oder gar kein Empfangssignal Rᵢ erhält/erhalten: In diesem Fall verdeckt das Fahrzeug 2 den Ausbreitungsweg vom Radarsender 11 zu diesem Radarempfänger 13.

In Kenntnis der Sende- und Empfangspositionen S, Eᵢ (z.B. Montagehöhen h und Abstände dᵢ), und des Aussendewinkels α, über welchen der Radarsender 11 seine Radarstrahlen 12 aussendet, kann somit ungefähr auf die Position des Fahrzeugs 2 in der Messebene 18 geschlossen werden. Je mehr Radarempfänger 13 vorgesehen werden, d.h. je dichter diese liegen, umso genauer kann aus der Abschattung einer oder mehrer Radarempfänger 13 auf die ungefähre Position des Fahrzeugs 2 geschlossen werden.

Die Positionsmessung kann verbessert werden, wenn zusätzlich - z.B. anhand von Interferenzmessungen an CW-Radarstrahlen oder Laufzeitmessungen an gepulsten Radarstrahlen - der Abstand einer reflektierenden Oberfläche des Fahrzeugs 2, hier beispielsweise der Deckfläche 4, zu einem Radarempfänger 13 gemessen wird, aus welchen Zusatzinformationen die Abschattungsinformationen verifiziert und verbessert werden können, um die Position des Fahrzeugs 2, z.B. eines Referenzpunktes P desselben, in der Messebene 18 genauer zu lokalisieren.

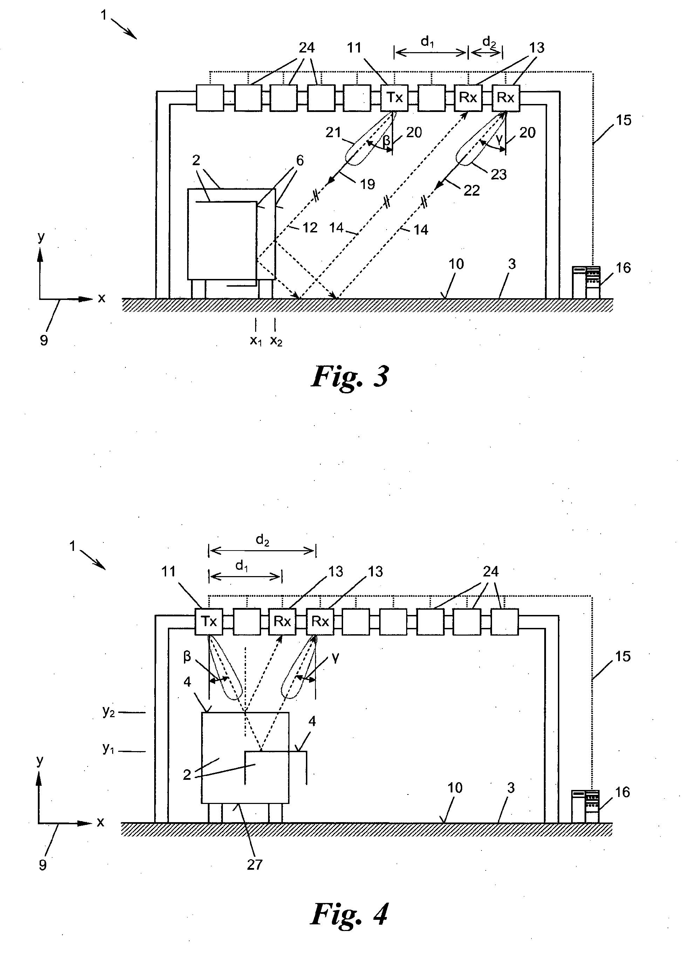

Die Fig. 3 und 4 zeigen ein zu Fig. 1 alternativ oder zusätzlich eingesetztes Messprinzip der Vorrichtung 1. Bei der Ausführungsform der Fig. 3 und 4 werden gerichtete Radarstrahlen 12 verwendet, d.h. der Radarsender 11 sendet seine Radarstrahlen in einer Hauptsenderichtung 19 aus, die unter einem Winkel β zur Vertikalen 20 in der Messebene 18 verläuft. Es versteht sich, dass Radarstrahlen 12 nicht vollkommen exakt in einer einzigen Richtung gebündelt werden können, sondern jede Radarantenne in der Praxis eine keulenförmige Richtcharakteristik 21 hat, wobei die zentrale Achse der Hauptkeule 21 des Radarsenders 13 als Hauptsenderichtung 19 betrachtet wird. Der Öffnungs- bzw. Bündelungswinkel der Sendekeule 21 hängt von der Richtwirkung der Antenne des Radarsenders 11 ab, welche auch durch den sog. "Antennengewinn", gemessen in dB, definiert wird. Beispielsweise erzielt ein Radarsender 11 mit einem Antennengewinn von 20 dB eine gute Richtwirkung mit einem Öffnungswinkel (Halbwertsbreite) der Sendekeule 21 von einigen wenigen Grad bzw. einigen wenigen Steradiant. Je stärker die Richtwirkung des Radarsenders 11, d.h. je höher der Antennengewinn seiner Antenne ist, desto mehr Radarenergie liegt in der Hauptsenderichtung 19 und desto genauer ist die nachfolgend beschriebene Positionsmessung, weil mehr Radarempfänger 13 in kleineren Abständen dᵢ verwendet werden können.

Unter Verwendung eines derart gerichteten Radarsenders 11 kann in der Messebene 18 nun die Position einer im wesentlichen vertikalen Seiten- bzw. Stirnfläche 5 - 8 (Fig. 3) oder einer im wesentlichen horizontalen Deckfläche 4 (Fig. 4) des Fahrzeugs 2 vermessen werden.

Das Messprinzip von Fig. 3 nützt den "Corner-Effekt" ("Katzenaugen-Reflektor"-Effekt) einer Sekundärreflexion des Radarstrahls 12 an der Ebene 10 der Fahrbahn 3 aus, welche einen etwa rechten Winkel mit der zu vermessenden vertikalen Oberfläche, z.B. der Seitenwand 5, 6 oder Stirnwand 7, 8, bildet. Wie in Fig. 3 gezeigt, trifft der reflektierte Radarstrahl 14 je nach der x-Position x₁, x₂ der Seitenwand 6 des Fahrzeugs 2 bei gleichbleibender Hauptsenderichtung 19 auf unterschiedlichen Radarempfängern 13 auf. Je nach x-Position der Seitenfläche 6 empfängt somit ein anderer Radarempfänger 13 das jeweils stärkste Empfangssignal Rᵢ. Durch Auswerten der Signalstärken der Empfangsignale Rᵢ der Radarempfänger 13 in der Auswerteeinrichtung 16 kann somit jener Radarempfänger 13 ermittelt werden, welcher das stärkste Empfangssignal Rᵢ empfängt. Aus der bekannten Empfangsposition Eᵢ dieses Radarempfängers 13 - und den übrigen bekannten geometrischen Abmessungen wie Sendeposition S und Winkel β - kann somit die Position, hier die x-Koordinate, der Seitenfläche 6 des Fahrzeugs 2 im Koordinatensystem 9 ermittelt werden. Dies erfordert lediglich eine einfache trigonometrische Berechnung der in Fig. 3 gezeigten geometrischen Verhältnisse und bedarf weder einer Auswertung von Impulslaufzeiten noch einer Dopplerauswertung der Radarstrahlen 12, 14. Selbstverständlich kann das Positionsmessergebnis durch optionale Berücksichtigung von Laufzeiten und Entfernungsmessungen an den Radarstrahlen 12, 14 noch zusätzlich verbessert werden.

Fig. 4 zeigt das geringfügig abgewandelte Prinzip der Vermessung einer horizontalen Oberfläche wie der Deckfläche 4. Wie ersichtlich trifft der unter dem Winkel β in der Hauptsenderichtung 19 ausgestrahlte Radarstrahl 12 bei unterschiedlichen Höhen y₁, y₂ der Deckfläche 4 des Fahrzeugs 2 auf unterschiedlichen Radarempfänger 13 auf, sodass wieder aus der Empfangsposition Eᵢ jenes Radarsenders 13, welcher das größte Empfangssignal Rᵢ erhält, und den bekannten Werten von Sendeposition S und Winkel β mittels trigonometrischer Berechnung die Position, hier y-Koordinate, der Deckfläche 4 des Fahrzeugs 2 berechnet werden kann.

In den Ausführungsformen der Fig. 3 und 4 kann die Auswahl des jeweils stärksten Empfangssignals Rᵢ und damit am stärksten vom reflektierten Radarstrahl 14 getroffenen Radarempfängers 13 jeweils verbessert werden, indem auch die Radarempfänger 13 mit Richtantennen ausgestattet werden, d.h. einer Hauptempfangsrichtung 22, welche der Achse einer Empfangskeule 23 des jeweiligen Radarempfängers 13 entspricht. Bei der Ausführungsform von Fig. 3 wird dazu die Hauptempfangsrichtung 22, hier repräsentiert durch den Winkel γ zur Vertikalen 20, parallel zur Hauptsenderichtung 19 eingestellt (β = γ); und bei der Ausführungsform von Fig. 4 wird dazu die Hauptempfangsrichtung 22 bezüglich der Vertikalen 20 spiegelbildlich zur Hauptsenderichtung 19 eingestellt (γ = - β).

Wie aus den Fig. 3 und 4 ersichtlich, kann für jeden der Radarsender und -empfänger 11, 13 auch jeweils ein Radarsendeempfänger (Transceiver) 24 verwendet werden. Mit anderen Worten wird an den Sende- und Empfangspositionen S, Eᵢ jeweils ein Sendeempfänger 24 angeordnet, der wahlweise einmal als Radarsender 11 und einmal als Radarempfänger 13 betrieben werden kann. Die Betriebsartenauswahl des jeweiligen Sendeempfängers 24 kann dabei im Zeitmultiplex von der Auswerteeinrichtung 16 gesteuert werden, d.h. diese wählt aus, zu welchem Zeitpunkt ein Sendeempfänger 24 als Radarsender 11 oder als Radarempfänger 13 arbeitet.

Bevorzugt sind zu einem bestimmten Zeitpunkt jeweils nur einer der Sendeempfänger 24 als Radarsender 11 und alle anderen als Radarempfänger 13 tätig (Zeit-Multiplex-Verfahren; TDMA, Time Division Multiplex Access). Dies ist jedoch nicht zwingend; auch mehrere Radarsender 11 können gleichzeitig betrieben werden, beispielsweise auf unterschiedlichen Frequenzen (Frequenz-Multiplex-Verfahren; FDMA, Frequency Division Multiplex Access) oder mittels unterschiedlicher orthogonaler Codierungen bzw. Modulationen (Code-Multiplex-Verfahren; CDMA, Code Division Multiple Access), sodass die Vorrichtung 1 sich gleichsam aus mehreren "Sub"-Vorrichtungen 1 zusammensetzt, d.h. jeweils einer Zusammenstellung aus einem Radarsender 11 und mehreren Radarempfängern 13. Auch ist ersichtlich, dass die Positionen S des Radarsenders 11 und Eᵢ der Radarempfänger 13 beliebig und austauschbar oberhalb der Ebene 10 der Fahrbahn 3 sind und jeweils für die gewünschte Messordnung, d.h. den gewünschten Bereich von Messpunkten in der Messebene 13, der damit vermessen werden soll, gewählt werden.

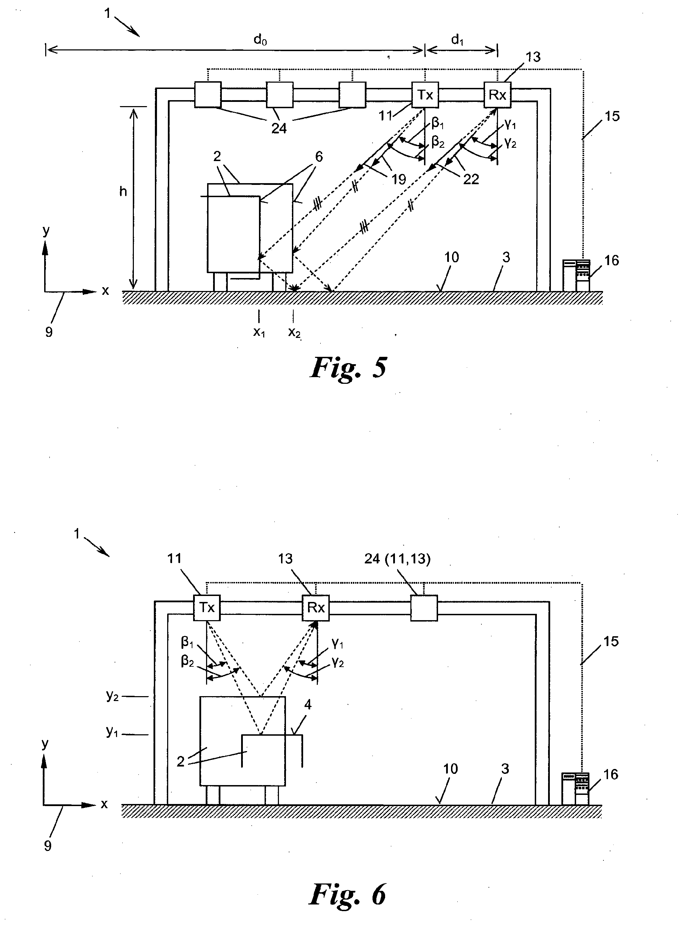

Die Fig. 5 und 6 zeigen ein weiteres Messprinzip der Vorrichtung 1 der Fig. 1 bis 4, welches alternativ oder zusätzlich zu den Messprinzipien der Fig. 1 bis 4 verwendet werden kann. In den Fig. 5 und 6 wird jeweils ein - aus den Sendeempfängern 24 gebildetes - Paar aus einem Radarsender 11 und einem Radarempfänger 13 verwendet, die jeweils mit richtungssteuerbaren Richtantennen ausgestattet sind: Sowohl die Hauptsenderichtung 19 des Radarsenders 11 als auch die Hauptempfangsrichtung 22 des Radarempfängers 13 ist steuerbar, d.h. ihre Winkel β und γ in der Messebene 18 veränderbar. Die Fig. 5 und 6 zeigen dabei jeweils zwei beispielhafte Winkelstellungen β₁, β₂ und γ₁ und γ₂ der Hauptsende- und Hauptempfangsrichtungen 19, 22.

In Fig. 5 werden zur Vermessung von vertikalen Oberflächen 5 - 8 des Fahrzeugs 2 die Hauptsende- und Hauptempfangsrichtungen 19, 22 jeweils parallel gewählt: Zu einem ersten Zeitpunkt t₁ ist β₁ = γ₁, und zu einem zweiten Zeitpunkt t₂ ist β₂ = γ₂. Bei der Ausführungsform der Fig. 6 zur Vermessung von horizontalen Oberflächen 4 werden bezüglich der Vertikalen 20 gegengleiche Hauptsende- und Hauptempfangsrichtungen 19, 22 verwendet, d.h. zu einem ersten Zeitpunkt t₁ ist β₁ = -γ₁, und zu einem zweiten Zeitpunkt t₂ ist β₂ = -γ₂. Es versteht sich, dass die Hauptsende- und -empfangsrichtungen 19, 22 des Radarsenders 11 und der Radarempfängers 13 auch noch in weitere Stellungen zu weiteren Zeitpunkten t₃, t₄ ..., allgemein tᵢ, gebracht werden können; beispielsweise werden die Hauptsende- und Hauptempfangsrichtungen 19, 22 kontinuierlich oder diskretisiert über einen Winkelbereich verschwenkt.

Durch aufeinanderfolgendes Verwenden unterschiedlicher Hauptsende- und Empfangsrichtungen 19, 22 bzw. Winkel β, γ können somit verschiedene Messpunkte in der Messebene 18 "abgetastet" werden: Bei jener Winkelstellung β, γ bzw. Hauptsende- und Empfangsrichtung 19, 22, bei welcher das stärkste Empfangssignal Rᵢ im Radarempfänger 13 empfangen wird, ist offensichtlich die Reflexion an der zu vermessenden Fläche 6 (Fig. 5) bzw. 4 (Fig. 6) aufgetreten. Aus der so gefundenen Richtung 19, 22 bzw. β, γ und kann dann in Kenntnis der bekannten Sende- und Empfangspositionen S, Eᵢ des Radarsenders 11 und Radarempfängers 13 (hier: Montagehöhe h und Abstände dᵢ) wieder die x-Koordinate der Seitenwand 6 (Fig. 5) bzw. die y-Koordinate der Deckwand 4 (Fig. 6) mittels trigonometrischer Überlegungen berechnet werden.

Zur Richtungssteuerung der Radarsender und Radarempfänger 11, 13 können diese beispielsweise mit mechanisch schwenkbaren Richtantennen, mit einer Mehrzahl fest eingestellter und jeweils selektiv auswählbarer Richtantennen, oder bevorzugt mit phasengesteuerten Antennenarrays (phased arrays) ausgestattet werden, welch letztere, wie dem Fachmann bekannt, durch unterschiedliche Phasenansteuerung einer Vielzahl nebeneinander angeordneter Antennen Richtwirkung in einer gewünschten Richtung entfalten. Die Richtungssteuerung dient auch dazu, nicht nur einen einzelnen Punkt in dessen Lage zu bestimmen, sondern die Lage einer ganzen Fläche durch einen Schwenk der Antennenstrahlrichtung zu ermitteln (zu "scannen").

Anstelle eines zeitlich aufeinanderfolgenden Verwendens verschiedener Hauptsende- und Hauptempfangsrichtungen 19, 22 bzw. Winkel β, γ können diese auch gleichzeitig verwendet werden, wenn der Radarsender 11 und der Radarempfänger 13 jeweils mehrere unterschiedlich ausgerichtete Richtantennen besitzen, wie später noch anhand von Fig. 8 weiter erläutert.

Es versteht sich, dass die Ausführungsformen der Fig. 3 und 4 einerseits und der Fig. 5 und 6 andererseits auch miteinander kombiniert werden können. So können beispielsweise bei den richtungssteuerbaren Radarsendern und -empfängern 11, 13 der Ausführungsform der Fig. 5, 6 auch zusätzliche Radarempfänger 13 an anderen Empfangspositionen Eᵢ von der Auswerteeinrichtung 16 ausgewertet werden und jener Radarempfänger 13, der bei einer bestimmten Winkelstellung β, γ das jeweils stärkste Empfangssignal Rᵢ führt, für die trigonometrische Auswertung herangezogen werden. Dadurch kann der Messbereich (die "Apertur") der Messvorrichtung der Fig. 5, 6 erweitert werden, beispielsweise über die gesamte Breite der Fahrbahn 3 (Fig. 2a) oder einen längeren Längsabschnitt der Fahrbahn (Fig. 2b). Umgekehrt können bei der Ausführungsform der Fig. 3, 4 zusätzlich diese Richtungen β, γ variiert werden, um mit derselben Anzahl von Radarempfängern 13 zusätzliche Mess- bzw. Abtastpunkte in der Messebene 18 zu erhalten.

Fig. 7 zeigt das Prinzip des "range gating" durch Einrichtung eines Zeitfensters 25 nach jeweils einem Sendeimpuls T eines gepulsten Radarstrahls 12. Nur innerhalb des Zeitfensters 25 in den Empfangsignalen Rᵢ der Radarempfänger 13 auftretende Empfangsimpulse Iᵢ werden berücksichtigt; ein nach dem Zeitfenster 25 ("zu spät") innerhalb des anschließenden Sperrfensters 26 einlangender Empfangsimpuls I₄ wird nicht berücksichtigt, d.h. die Auswerteeinrichtung 16 ignoriert bei ihrem Signalstärkenvergleich jene Empfangssignale Rᵢ von Radarempfängern 13, welche einen Empfangsimpuls außerhalb des Zeitfensters 25 nach dem jeweils zugehörigen Sendeimpuls T betreffen. Analog dazu sind dafür auch andere Laufzeit-Messprinzipien wie z.B. FMCW-Verfahren (Frequency Modulated Continous Wave) für das "range gating" anwendbar, wie dem Fachmann bekannt.

Dadurch können Mehrfachreflexionen der Radarstrahlen 13, wie sie beispielsweise an Umgebungsobjekten wie der Montagebrücke 17 oder beispielsweise zwischen der Bodenplatte 27 des Fahrzeugs 2 und der Fahrbahn 3 auftreten und zu längeren Signallaufzeiten führen, ausgeblendet werden, sodass lediglich Primärreflexionen am Fahrzeug 2 (Fig. 1, 4, 6) oder Primär- und Sekundärreflexionen am Fahrzeug 2 und der Fahrbahn 3 (Fig. 3, 5) bei der Messung berücksichtigt werden.

Fig. 8 zeigt das Empfangssignal Rᵢ eines einzigen Radarempfängers 13 der Ausführungsform der Fig. 5, 6 in aufeinanderfolgenden Stadien a, b, c,... des Messverfahrens, welche jeweils einer anderen Winkelstellung β, γ der Hauptsende- und Hauptempfangsrichtungen 19, 22 entsprechen, über der Zeit t. Wie ersichtlich, treten bei verschiedenen Winkeln β₁, γ₁; β₂, γ₂; β₃, γ₃ Empfangssignale R₁, R₂, R₃ mit unterschiedlichen Signalstärken RSSI₃, RSSI₂, RSSI₁ - bzw. bei gepulsten Radarstrahlen mit verschieden starken Empfangsimpulsen I₃, I₂, I₁ - auf. Durch Aufzeichnen der Empfangssignale Rᵢ oder Impulse Iᵢ in den aufeinanderfolgenden Stadien a, b, c und anschließendes Vergleichen der Signalstärken RSSIᵢ bzw. Impulse Iᵢ kann nun jene Winkelstellung βᵢ, γᵢ ermittelt werden, bei welcher die maximale Signalstärke RSSIᵢ auftritt. Damit sind wieder die Winkel βᵢ, γ₁ aufgefunden, und anhand der genannten trigonometrischen Berechnungen kann die Position der jeweils zu vermessenden Oberfläche 6 bzw. 4 berechnet werden.

In jener Ausführungsform, bei welcher die Radarsender und -empfänger 11, 13 jeweils mehrere in den verschiedenen Winkeln β₁, γ₁; β₂, γ₂ ; β₃, γ₃ ausgerichtete Richtantennen besitzen, so dass die vorgenannten Messungen in den verschiedenen Hauptsende- und Hauptempfangsrichtungen 19, 22 gleichzeitig durchgeführt werden können, stellen die in Fig. 8 gezeigten Empfangssignale Rᵢ gleichzeitig die Empfangssignale verschiedener Richtantennen a), b), c)... des Radarempfängers 13 dar. Die Empfangssignale Rᵢ werden also nicht in aufeinanderfolgenden Stadien, sondern gleichzeitig an den Ausgängen verschiedener Richtantennen a), b), c)... ein und desselben Radarempfängers 13 erhalten.

Auch in dieser Ausführungsform kann wieder durch Vergleichen der Signalstärken RSSIᵢ bzw. Impulse Iᵢ jene Richtantenne a), b), c)... des Radarempfängers 13 und damit jene Winkelstellung γᵢ (γᵢ = βᵢ in Fig. 5; γᵢ = - βᵢ in Fig. 6) ermittelt werden, bei welcher die maximale Signalstärke RSSIᵢ auftritt. Damit sind wieder die Winkel βᵢ und γᵢ aufgefunden, und anhand der genannte trigonometrischen Berechnungen kann die Position der jeweils zu vermessenden Oberfläche 6 bzw. 4 wieder berechnet werden. Auch diese Variante ist mit allen vorgenannten Varianten des Verfahrens und der Vorrichtung kombinierbar.

## Patentansprüche

1. Vorrichtung (1) zum Messen der Position (P) eines Fahrzeugs (2) oder einer Oberfläche (4 - 8) desselben auf einer Fahrbahn (3), mit
zumindest einem Radarsender (11), der in einer Sendeposition (S) oberhalb der Ebene (10) der Fahrbahn (3) gegenüber dieser ortsfest angeordnet ist und Radarstrahlen (12) nach unten sendet, **gekennzeichnet durch**
eine Mehrzahl von Radarempfängern (13), die in verschiedenen Empfangspositionen (Eᵢ) mit gegenseitigen Abständen (dᵢ) oberhalb der Ebene (10) der Fahrbahn (3) verteilt gegenüber dieser ortsfest angeordnet sind, Reflexionen (14) der Radarstrahlen (12) von unten empfangen und jeweils in ein Empfangssignal (Rᵢ) umwandeln, und
eine an den Radarsender (11) und die Radarempfänger (13) angeschlossene Auswerteeinrichtung (16), welche dafür ausgebildet ist, die Signalstärken (RSSIᵢ) der Empfangssignale (Rᵢ) der verschiedenen Radarempfänger (13) miteinander zu vergleichen und dabei zumindest einen Radarempfänger (13) zu ermitteln, welcher ein schwächeres oder das stärkste Empfangssignal (Rᵢ) aufweist, und aus der Sendeposition (S) sowie aus der Empfangsposition (Eᵢ)des zumindest einen ermittelten Radarempfängers (13) die genannte Position (P) zu messen.

2. Vorrichtung nach Anspruch 1, **dadurch gekennzeichnet, dass** der Radarsender (11) und die Radarempfänger (13) in einer gemeinsamen, die Fahrbahn (3) querenden Ebene (18) liegen, bevorzugt an einer die Fahrbahn (3) querüberspannenden Montagebrücke (17) montiert.

3. Vorrichtung nach Anspruch 1 oder 2, **dadurch gekennzeichnet, dass** der Radarsender (11) von Sendeimpulsen (T) gesteuert gepulste Radarstrahlen (12) aussendet und die Empfangssignale (Rᵢ) folglich Empfangsimpulse (Iᵢ) enthalten, wobei die Auswerteeinrichtung (16) dafür ausgebildet ist, für die Positionsmessung nur solche Empfangssignale (Rᵢ) zu berücksichtigen, deren Empfangsimpulse (Iᵢ) jeweils innerhalb eines vorgegebenen Zeitfensters (25) nach einem Sendeimpuls (T) liegen.

4. Vorrichtung nach einem der Ansprüche 1 bis 3, **dadurch gekennzeichnet, dass** die Auswerteeinrichtung (16) dafür ausgebildet ist, im genannten Vergleich jene Radarempfänger (13) zu ermitteln, welche ein schwächeres Empfangssignal (Rᵢ) aufweisen.

5. Vorrichtung nach einem der Ansprüche 1 bis 3, **dadurch gekennzeichnet, dass** der Radarsender (11) die Radarstrahlen (12) in einer Hauptsenderichtung (19) gerichtet aussendet, die zur Vertikalen (20) geneigt ist, und dass die Auswerteeinrichtung (16) dafür ausgebildet ist, im genannten Vergleich jenen Radarempfänger (13) zu ermitteln, welcher das stärkste Empfangssignal (Rᵢ) aufweist.

6. Vorrichtung nach Anspruch 5, **dadurch gekennzeichnet, dass** jeder Radarempfänger (13) Reflexionen (14) vorwiegend in einer Hauptempfangsrichtung (22) empfängt, die zur Vertikalen (20) geneigt ist, wobei die Hauptsenderichtung (19) und die Hauptempfangsrichtungen (22) in einer gemeinsamen Ebene (18) liegen.

7. Vorrichtung nach Anspruch 6, **dadurch gekennzeichnet, dass** die Hauptempfangsrichtungen (22) zueinander und zur Hauptsenderichtung (19) parallel sind, um die Position (P) einer im wesentlichen vertikalen Oberfläche (5 - 8) zu ermitteln.

8. Vorrichtung nach Anspruch 6, **dadurch gekennzeichnet, dass** die Hauptempfangsrichtungen (22) zueinander parallel sind und zur Hauptsenderichtung (19) bezüglich der Vertikalen (20) spiegelbildlich geneigt sind, um die Position (P) einer im wesentlichen horizontalen Oberfläche (4) zu ermitteln.

9. Vorrichtung nach Anspruch 3 in Verbindung mit Anspruch 7 oder 8, **dadurch gekennzeichnet, dass** die Auswerteeinrichtung (16) dafür ausgebildet ist, zusätzlich Laufzeitmessungen zwischen Sende- und Empfangsimpulsen (T, Ii) durchzuführen und daraus den Abstand der Oberfläche (4 - 8) zu einem oder mehreren Radarempfängern (13) zu ermitteln, um die Positionsmessung zu verbessern.

10. Vorrichtung nach Anspruch 9, **dadurch gekennzeichnet, dass** die Laufzeitmessungen zwischen Sende- und Empfangsimpulsen (T, Iᵢ) Impulslaufzeitmessungen sind.

11. Vorrichtung nach Anspruch 9, **dadurch gekennzeichnet, dass** die Laufzeitmessungen zwischen Sende- und Empfangsimpulsen (T, Iᵢ) nach dem FMCW-Verfahren durchgeführt werden.

12. Vorrichtung nach einem der Ansprüche 6 bis 11, **dadurch gekennzeichnet, dass** die Hauptsende- und Hauptempfangsrichtungen (19, 22) des Radarsenders (11) und der Radarempfänger (13) im Betrieb veränderbar sind, bevorzugt mittels phasengesteuerter Antennenarrays oder selektiver Auswahl einzelner Richtantennen (a, b, c).

13. Vorrichtung nach einem der Ansprüche 1 bis 12, **dadurch gekennzeichnet, dass** der Radarsender (11) und die Radarempfänger (13) jeweils durch einen Radarsendeempfänger (24) gebildet sind, der im Code-, Zeit- oder Frequenzmultiplex wahlweise als Radarsender (11) oder Radarempfänger (13) betreibbar ist.

14. Vorrichtung nach einem der Ansprüche 1 bis 13, **dadurch gekennzeichnet, dass** die Frequenz der Radarstrahlen (12, 14) 1 GHz bis 100 GHz beträgt, bevorzugt 50 GHz bis 100 GHz.

## Claims

1. An apparatus (1) for measuring the position (P) of a vehicle (2) or a surface (4-8) thereof on a roadway (3), comprising
at least one radar transmitter (11), which is arranged in a transmitting position (S) above the plane (10) of the roadway (3) stationary with respect to it and transmits radar beams (3) downwardly, **characterised by**
a plurality of radar receivers (13), which are distributed above the plane (10) of the roadway (3) stationary with respect to it and in different receiving positions (Eᵢ) at distances (dᵢ) from one another, receive reflections (14) of the radar beams (12) from beneath and convert said reflections into a received signal (Rᵢ), and
an evaluation device (16), which is connected to the radar transmitter (11) and the radar receivers (13) and is configured to compare with one another the signal strengths (RSSIᵢ) of the received signals (Rᵢ) of the different radar receivers (13) and thereby determine at least one radar receiver (13) which has a weaker or the strongest received signal (Rᵢ) and measure the said position (P) from the transmitting position (S) as well as from the receiving position (Eᵢ) of the at least one determined radar receiver (13).

2. The apparatus according to Claim 1, **characterised in that** the radar transmitter (11) and the radar receivers (13) lie in a common plane (18) crossing the roadway (3), and are preferably mounted on a mounting gantry (17) spanning the roadway (3) transversely.

3. The apparatus according to Claim 1 or 2, **characterised in that** the radar transmitter (11) transmits pulsed radar beams (12) controlled by transmitted pulses (T) and the received signals (Rᵢ) consequently contain received pulses (Iᵢ), wherein the evaluation device (16) is configured to take into account for said position measuring only those received signals (Rᵢ) of which the received pulses (Iᵢ) lie within a predefined time window (25) after a transmitted pulse (T).

4. The apparatus according to one of Claims 1 to 3, **characterised in that** the evaluation device (16) is configured to determine in said comparison those radar receivers (13) which have a weaker received signal (Ri).

5. The apparatus according to one of Claims 1 to 3, **characterised in that** the radar transmitter (11) transmits the radar beams (12) directionally in a primary transmitting direction (19), which is inclined relative to the vertical (20), and **in that** the evaluation device (16) is configured to determine that radar receiver (13) in said comparison which has the strongest received signal (Rᵢ).

6. The apparatus according to Claim 5, **characterised in that** each radar receiver (13) receives reflections (14) predominantly in a primary receiving direction (22), which is inclined relative to the vertical (20), wherein the primary transmitting direction (19) and the primary receiving directions (22) lie in a common plane (18).

7. The apparatus according to Claim 6, **characterised in that** the primary receiving directions (22) are parallel to one another and to the primary transmitting direction (19) in order to determine the position (P) of a substantially vertical surface (5 - 8).

8. The apparatus according to Claim 6, **characterised in that** the primary receiving directions (22) are parallel to one another and are inclined to the primary transmitting direction (19) in a mirror-inverted manner relative to the vertical (20), in order to determine the position (P) of a substantially horizontal surface (4).

9. The apparatus according to Claim 3 in conjunction with Claim 7 or 8, **characterised in that** the evaluation device (16) is configured to additionally take time-of-flight measurements between transmitted and received pulses (T, Iᵢ) and to determine from this the distance between the surface (4-8) and one or more radar receivers (13), in order to improve the position measurement.

10. The apparatus according to Claim 9, **characterised in that** the time-of-flight measurements between transmitted and received pulses (T, Iᵢ) are pulse time-of-flight measurements.

11. The apparatus according to Claim 9, **characterised in that** the time-of-flight measurements between transmitted and received pulses (T, Iᵢ) are taken in accordance with the FMCW method.

12. The apparatus according to one of Claims 6 to 11, **characterised in that** the primary transmitting and receiving directions (19, 22) of the radar transmitter (11) and of the radar receivers (13) can be changed during operation, preferably by means of phase-controlled antenna arrays or an arbitrary selection of individual directional antennas (a, b, c).

13. The apparatus according to one of Claims 1 to 12, **characterised in that** the radar transmitter (11) and the radar receivers (13) are each formed by a radar transceiver (24), which can be operated selectively as a radar transmitter (11) or radar receiver (13) in code, time or frequency multiplex.

14. The apparatus according to one of Claims 1 to 13, **characterised in that** the frequency of the radar beams (12, 14) is 1 GHz to 100 GHz, preferably 50 GHz to 100 GHz.

## Revendications

1. Dispositif (1) pour mesurer la position (P) d'un véhicule (2) ou d'une surface (4 - 8) de celui-ci sur une chaussée (3), avec
au moins un émetteur radar (11) agencé dans une position d'émission (S) au-dessus du plan (10) de la chaussée (3), fixement par rapport à celui-ci, et émettant des rayons radar (12) vers le bas, **caractérisé par**
une pluralité de récepteurs radar (13) agencés au-dessus du plan (10) de la chaussée (3) dans différentes positions de réception (Eᵢ), fixement par rapport à celui-ci, et répartis selon des espacements réciproques (dᵢ), de manière à recevoir des réflexions (14) des rayons radar (12) par le bas et les transformer respectivement en un signal de réception (Ri), et
un dispositif d'évaluation (16) raccordé à l'émetteur radar (11) et aux récepteurs radar (13), lequel est conçu pour comparer entre elles les puissances de signal (RSSIᵢ) des signal de réception (Rᵢ) des différents récepteurs radar (13), tout en détectant au moins un récepteur radar (13) présentant un signal de réception (Rᵢ) plus faible ou le plus puissant, et mesurer ladite position (P) à partir de la position d'émission (S) et de la position de réception (Eᵢ) de l'au moins un récepteur radar (13) déterminé.

2. Dispositif selon la revendication 1, **caractérisé en ce que** l'émetteur radar (11) et les récepteurs radar (13) se trouvent dans un même plan commun (18) transversal à la chaussée (3), en étant de préférence montés sur un pont de montage (17) traversant la chaussée (3).

3. Dispositif selon la revendication 1 ou 2, **caractérisé en ce que** l'émetteur radar (11) émet des rayons radar (12) pulsés de façon commandée par des impulsions d'émission (T), et les signaux de réception (Rᵢ) contiennent par conséquent des impulsions de réception (Iᵢ), le dispositif d'évaluation (16) étant conçu pour tenir compte uniquement des signaux de réception (Rᵢ) dont les impulsions de réception (Iᵢ) sont respectivement incluses dans une fenêtre temporelle (25) prédéfinie suite à une impulsion d'émission (T), pour la mesure de position.

4. Dispositif selon l'une des revendications 1 à 3, **caractérisé en ce que** le dispositif d'évaluation (16) est conçu pour détecter, dans ladite comparaison, les récepteurs radar (13) présentant un signal de réception (Rᵢ) plus faible.

5. Dispositif selon l'une des revendications 1 à 3, **caractérisé en ce que** l'émetteur radar (11) émet les rayons radar (12) de façon à les diriger dans une direction d'émission principale (19) inclinée par rapport à la verticale (20), et **en ce que** le dispositif d'évaluation (16) est conçu pour détecter, dans ladite comparaison, le récepteur radar (13) présentant le signal de réception (Rᵢ) le plus puissant.

6. Dispositif selon la revendication 5, **caractérisé en ce que** chaque récepteur radar (13) reçoit des réflexions (14) essentiellement dans une direction de réception principale (22) inclinée par rapport à la verticale (20), la direction d'émission principale (19) et les directions de réception principales (22) s'étendant dans un plan commun (18).

7. Dispositif selon la revendication 6, **caractérisé en ce que** les directions de réception principales (22) sont parallèles les unes aux autres et à la direction d'émission principale (19), pour détecter la position (P) d'une surface sensiblement verticale (5 - 8).

8. Dispositif selon la revendication 6, **caractérisé en ce que** les directions de réception principales (22) sont parallèles les unes aux autres et inclinées par rapport à la direction d'émission principale (19), de façon symétrique par rapport à la verticale (20), pour détecter la position (P) d'une surface quasiment horizontale (4).

9. Dispositif selon la revendication 3 en association avec la revendication 7 ou 8, **caractérisé en ce que** le dispositif d'évaluation (16) est conçu pour effectuer également des mesures de temps de parcours entre des impulsions d'émission et de réception (T, Iᵢ), et pour en déduire la distance entre la surface (4 - 8) et un ou plusieurs récepteurs radar (13), afin d'améliorer la mesure de position.

10. Dispositif selon la revendication 9, **caractérisé en ce que** les mesures de temps de parcours entre des impulsions d'émission et de réception (T, Iᵢ) sont des mesures de temps de parcours d'impulsions.

11. Dispositif selon la revendication 9, **caractérisé en ce que** les mesures de temps de parcours entre des impulsions d'émission et de réception (T, Iᵢ) sont effectuées selon le procédé FMCW.

12. Dispositif selon l'une des revendications 6 à 11, **caractérisé en ce que** les directions principales d'émission et de réception (19, 22) de l'émetteur radar (11) et des récepteurs radar (13) peuvent être modifiées pendant le fonctionnement, de préférence au moyen d'un réseau d'antennes à commande de phase ou d'une sélection d'antennes directives (a, b, c) individuelles.

13. Dispositif selon l'une des revendications 1 à 12, **caractérisé en ce que** l'émetteur radar (11) et les récepteurs radar (13) sont respectivement formés par un émetteur-récepteur radar (24), lequel peut être opéré au choix comme émetteur radar (11) ou comme récepteur radar (13) dans un multiplexage fréquentiel ou temporel ou à répartition par code.

14. Dispositif selon l'une des revendications 1 à 13, **caractérisé en ce que** la fréquence des rayons radar (12, 14) s'élève de 1 GHz à 100 GHz, de préférence de 50 GHz à 100 GHz.
